# FASCICULE DE BREVET EUROPEEN

(11) **EP 1 725 787 B1**
(45) Date de publication et mention de la délivrance du brevet: **05.09.2007**
(21) Numéro de dépôt: 05739421.5
(22) Date de dépôt: 17.03.2005
(51) Int. Cl.: F16G 3/08, B65G 15/32, F16G 3/00

(54) **ELEMENTS DE JONCTION INCORPORES A DES EXTREMITES DE BANDE TRANSPORTEUSE**
IN DEN ENDEN EINES FÖRDERBANDS EINGEBAUTE VERBINDUNGSELEMENTE
JOINTING ELEMENTS INCORPORATED INTO THE ENDS OF A CONVEYOR BELT

(30) Priorité: 18.03.2004 FR 0402888
(43) Date de publication de la demande: 29.11.2006
(73) Titulaire: Aser, F-42401 Saint-Chamond (FR)
(72) Inventeur: JAKOB, Horst, F-30360 Deaux (FR)
(74) Mandataire: Derambure, Christian
(86) Numéro de dépôt international: PCT/FR2005/000654
(87) Numéro de publication internationale: WO 2005/093287

(56) Documents cités:
- FR-A- 1 140 516
- GB-A- 548 209
- GB-A- 708 461
- US-A- 1 792 718
- US-A- 2 883 871
- US-A- 5 724 706
- US-A- 5 839 571
- US-B2- 6 601 698

## Description

On connaît de longue date les bandes transporteuses, généralement réalisées en caoutchouc ou en matière de synthèse et comportant une armature intérieure souple.

Divers moyens ont été jusqu'à présent utilisés pour opérer la jonction des extrémités d'une bande transporteuse initialement ouverte à ses deux extrémités, en vue de la transformer en une bande transporteuse opérationnelle dite sans fin. Ces moyens de jonction sont également utilisés pour l'insertion de tronçons nouveaux dans une bande transporteuse existante, en vue de rallonger ladite bande existante, par exemple pour suivre l'avancement de travaux miniers, ou pour remplacer une partie de la bande transporteuse qui a été endommagée.

Parmi ces moyens on peut citer la vulcanisation des extrémités, avec une opération préalable de mise à nu des armatures et la réalisation de degrés de formes complémentaires aux deux extrémités de la bande transporteuse. La vulcanisation donne d'excellents résultats mais elle souffre d'un inconvénient qui réside dans le temps de réalisation, allant souvent jusqu'à 24 heures, ce qui constitue un handicap.

Le collage au moyen de colles techniques est également employé. Il nécessite comme la vulcanisation un très grand soin en ce qui concerne la préparation des extrémités, et une grande rigueur en ce qui concerne les conditions d'application des colles techniques.

Les agrafes métalliques montées aux extrémités de la bande transporteuse et articulées au moyen d'une tige de liaison et d'articulation passant dans des charnons des agrafes métalliques, montées au bord des extrémités de la bande transporteuse, sont également un moyen connu largement utilisé pour la jonction des extrémités des bandes transporteuses. Cependant, ce moyen rencontre des problèmes causés par l'usure des agrafes et des tiges de liaison ainsi que par des arrachements localisés, ce qui entraîne des réparations et des temps d'arrêt multipliés des bandes transporteuses.

Des jonctions d'un nouveau genre ont été par ailleurs proposées par le déposant de la présente demande. Ces jonctions sont décrites en détail par exemple dans les brevets des Etats-Unis d'Amérique n^{os} 583 957 et 6 601 698. Il est fait expressément référence à ces brevets. En bref ces jonctions consistent en des éléments de jonction en caoutchouc ou en matière de synthèse, armés, en forme générale de H, des paires d'ailes s'étendant autour des extrémités de bande transporteuse, de part et d'autre de la partie centrale de la jonction en forme générale de H, les ailes étant munies, les unes de trous prépercés équipés d'inserts-cuvettes les autres des trous prépercés équipés d'inserts-douilles, permettant le passage, ou le vissage de vis traversant successivement l'aile supérieure, la bande transporteuse et l'aile inférieure équipées d'inserts-douilles. Ces trous équipés de cuvettes sont disposés en quinconce sur une assez grande surface de manière à répartir au mieux les efforts de traction subis par les ailes de la jonction et par la bande transporteuse.

Ces jonctions en H vissées dans le sens perpendiculaire au plan général des jonctions, décrites dans le brevet des Etats-Unis d'Amérique n° 6 601 698 B2, se sont avérées excellentes du point de vue de la résistance.

De plus, le démontage des jonctions vissées de ce type est possible, et il permet de façon aisée un remplacement d'une partie de bande transporteuse détériorée, ou le rallongement de la bande transporteuse, en vue de suivre l'avancement de travaux miniers, par exemple.

Toutefois, ces jonctions, qui ont résolu beaucoup de problèmes dans certaines industries, en particulier, les industries extractives lourdes, pour le transport du charbon, des minerais, des phosphates et autres produits en vrac lourds, rencontrent encore, dans certains cas, des problèmes d'arrachement des ailes qui, bien qu'elles soient biseautées dans le sens de l'épaisseur à l'extrémité qui est en contact avec la bande transporteuse, présentent une épaisseur qui donne parfois prise aux racleurs dont sont équipées ces bandes.

Enfin, il est souhaitable de disposer, par exemple pour le remplacement de bandes transporteuses de modèle et de longueur standard, pour une certaine machine, par exemple dans les travaux routiers, les travaux de terrassement, les travaux agricoles et des travaux similaires, de bandes transporteuses dont les extrémités soient préparées pour être raccordées facilement et rapidement.

On a déjà proposé dans le passé des bandes transporteuses équipées à leurs extrémités de demi-jonctions de formes complémentaires l'une de l'autre. Par exemple on peut citer les brevets antérieurs GB-A-548 209 de Dunlop Rubber Company Limited, GB-A-708 461 de Cable Belt Limited, FR-A-1 140 516 de Dunlop Rubber Company Limited.

Cependant, les éléments de jonction proposés dans ces brevets de l'art antérieur étaient difficiles à mettre en oeuvre et la manipulation des extrémités de bande transporteuse pour les présenter en vue de leur assujettissement mutuel était fort complexe. De plus les moyens d'assujettissement, lattes ou tiges passées dans des trous transversaux appartenant alternativement à l'une et à l'autre extrémité de la bande transporteuse étaient fort difficiles à mettre en place, en particulier sur des bandes transporteuses du type lourd. Enfin la résistance à la traction de ces jonctions à lattes transversales laissait à désirer. En effet, les lattes, ou tiges, transversales provoquaient dans la matière constitutive, présente entre les 2 couches d'armature disposées respectivement au-dessus et au-dessous des trous transversaux des effets de cisaillement, aboutissant à la détérioration des jonctions. Une jonction de ce type est connue du document US 5724706.

Le problème ainsi posé est résolu selon l'invention au moyen d'une jonction pour bande transporteuse, constituée de deux demi-jonctions, en caoutchouc vulcanisé ou en matière plastique, solidarisées chacune respectivement avec une extrémité de bande transporteuse, les demi-jonctions ayant une forme généralement plate et une épaisseur maximum égale ou légèrement inférieure à celle de l'extrémité de bande transporteuse avec laquelle elle est solidarisée et présentant des formes complémentaires leur permettant d'être imbriquées pour former une jonction dont l'épaisseur est au maximum égale à celle des extrémités de bande transporteuse, lesdites deux demi-jonctions comportant une armature souple, textile ou autre, caractérisée en ce que les dites deux demi-jonctions sont respectivement munies d'inserts-cuvettes et d'inserts du type douille permettant le passage de moyens d'assemblage, du type à tige, disposés perpendiculairement au plan général de la jonction, et que
- la solidarisation de chacune des deux demi-jonctions avec l'extrémité correspondante de bande transporteuse est réalisée d'une part grâce à la continuité de la matière constitutive de l'extrémité et de la demi-jonction et d'autre part au moyen des armatures souples, textiles ou autres, des extrémités correspondantes de bande transporteuse, chacune des armatures se prolongeant à l'intérieur de chaque demi-jonction en formant un repli du côté du bord libre, ou bord avant de chacune des demi-jonctions, à proximité dudit bord libre, les parties d'armature ainsi repliées se prolongeant au minimum au-delà de l'insert-douille le plus éloigné de la partie de bord avant alignée longitudinalement avec ledit insert-douille, les demi-jonctions mâles comportant deux niveaux, un niveau supérieur et un niveau inférieur, le niveau supérieur contenant l'armature repliée et le niveau inférieur ne comportant que de la matière constitutive, dont le bord avant a sensiblement la même forme que le bord avant du niveau supérieur, mais avec un décalage vers l'arrière correspondant au minimum à la distance séparant du bord avant les inserts-cuvettes les plus éloignés du bord avant, et les demi-jonctions femelles comportant deux niveaux, un niveau supérieur ne comportant que de la matière constitutive et dont le bord avant a une forme complémentaire de celle du bord avant des demi-jonctions mâles correspondantes, et un niveau inférieur contenant l'armature repliée et les inserts-douilles dont le bord avant est décalé vers l'avant par rapport au bord avant du niveau supérieur, sa forme étant complémentaire de celle du bord avant de la demi-jonction mâle,
- la solidarisation des demi-jonctions mâle et femelle l'une avec l'autre est effectuée au moyen d'éléments d'assemblage à tige par exemple des rivets ou des crampons, mais de préférence au moyen de vis dont la tête est en appui sur le fond des inserts-cuvettes et dont le filetage est vissé dans des inserts-douilles correspondants, filetés intérieurement, ou bien lisses dans le cas où les vis sont auto-taraudeuses, la tête des vis et leur extrémité opposée ne dépassant pas au-delà des surfaces extérieures des demi-jonctions à l'endroit où les vis sont implantées.

Pour la description de la présente invention, les conventions de description suivantes ont été adoptées, mais il est évident que des conventions inversées auraient tout aussi bien pu l'être, par exemple supérieur ou avant remplaçant inférieur ou arrière, suivant la position d'observation par rapport aux objets décrits ou la présentation des objets décrits par rapport à l'observateur. C'est pourquoi ces conventions de description sont évoquées ici. Dans la présente description et dans les revendications annexées, avant signifiera le côté libre de chacune des demi-jonctions, arrière signifiant le côté rattaché à l'extrémité de bande transporteuse correspondante, niveau supérieur signifiera le niveau proche de la partie de la bande transporteuse recevant les matières ou objets à transporter, niveau inférieur signifiera le niveau proche de la partie de la bande transporteuse qui touche les rouleaux moteurs et les rouleaux de renvoi. Mâle s'appliquera aux demi-jonctions comportant des inserts-cuvettes et femelle s'appliquera aux demi-jonctions comportant des inserts-douilles. Longitudinal signifiera le sens longitudinal, de la bande transporteuse, transversal le sens perpendiculaire au sens longitudinal de la bande transporteuse à laquelle se raccordent ou se raccorderont les demi-jonctions, et ce, quelles que soient les dimensions relatives des parties des demi-jonctions auxquelles ces adjectifs seront appliqués.

Il faut noter qu'en application de ce qui précède bien que dans tous les exemples représentés plus loin dans les dessins, les vis et les inserts-cuvettes de la demi-jonction mâle soient situés à l'opposé de la bande transporteuse, il est tout aussi possible de procéder à l'inverse, la partie mâle (donc ses vis et ses inserts-cuvettes) étant située du côté de la bande transporteuse.

Il faut noter que le terme "extrémité de bande transporteuse" employé dans la présente description ne signifie pas nécessairement une extrémité d'une bande transporteuse, déjà existante au stade de la fabrication des demi-jonctions. Il peut s'agir, comme on le verra plus loin, d'une "extrémité de bande transporteuse" comportant tous les éléments d'une bande transporteuse (matière constitutive entourant une armature souple de chaque côté de celle-ci et solidarisée avec celle-ci par exemple par vulcanisation) mais de très courte longueur, qui est destinée à être raccordée, par exemple par vulcanisation, selon des procédés bien connus, à une bande transporteuse de longueur choisie à un stade ultérieur de fabrication, ou même chez l'utilisateur, en vue de préparer un remplacement de bande transporteuse, ou un allongement de bande transporteuse pendant que celle-ci est encore en service, le montage effectif sur un dispositif de transport pouvant ainsi être réalisé en un très court délai si l'on fait la comparaison avec une vulcanisation effectuée sur une bande transporteuse qui a dû être arrêtée. Bien entendu, dans de nombreux cas, par exemple dans le cas où la bande transporteuse est de longueur standard (machines pour la mise en rouleaux de foin ou de paille, machines pour les travaux routiers, etc.) l' "extrémité de bande transporteuse" sur laquelle est réalisée la demi-jonction selon l'invention est celle d'une bande de grande longueur et non celle d'un très court tronçon comme dans le cas évoqué plus haut. Dans de nombreux cas le moulage de la demi-jonction sera effectué en même temps que celui de la bande transporteuse elle-même, les matières constitutives et l'armature étant les mêmes dans la bande transporteuse et dans les demi-jonctions réalisées à ses deux extrémités.

Selon un perfectionnement avantageux de l'invention qui procure aux demi-jonctions une meilleure résistance, la jonction est caractérisée en ce que les inserts-douilles sont implantés dans les demi-jonctions femelles de façon telle que la douille entraîne les bords du trou des deux parties d'armature entourant la douille perpendiculairement au plan général de ces couches et sont de ce fait solidarisées avec la demi-jonction femelle dans deux plans perpendiculaires par la matière constitutive et par les parties d'armature qui les entourent.

Selon un développement supplémentaire la jonction est caractérisée en ce que les inserts-douilles comportent une partie formant une collerette plate solidaire de la partie douille proprement dite et disposée perpendiculairement à l'extrémité de la douille qui est la plus proche de la surface extérieure du niveau inférieur de la demi-jonction femelle correspondante, en n'étant séparée de cette surface que par une mince couche de matière constitutive, ces collerettes s'étendant dans un plan parallèle au plan général de la demi-jonction et étant solidarisées avec la matière constitutive qui les entoure.

En ce qui concerne les inserts-cuvettes, il est avantageux que les inserts-cuvettes soient implantés dans les demi-jonctions mâles de façon telle que la cuvette s'appuie étroitement par ses parties bordant le trou central contre les bords du trou pratiqué dans deux parties d'armature, avec lesquelles elle est solidarisée par la matière constitutive environnante.

Diverses formes de bord avant des niveaux supérieur et inférieur des demi-jonctions mâle et femelle sont possibles sans sortir de la portée de l'invention. Parmi ces formes, on peut citer des jonctions dans lesquelles le bord avant du niveau supérieur de la demi-jonction mâle est constitué d'une suite de parties de bord avant perpendiculaires au sens longitudinal de la demi-jonction mâle, décalées les unes par rapport aux autres dans le sens longitudinal et de parties de bord avant s'étendant longitudinalement, chacune de ces parties de bord avant perpendiculaires au sens longitudinal étant reliée à la partie, ou aux parties, de bord avant perpendiculaire(s) au sens longitudinal décalée(s) vers l'arrière la plus proche, ou les plus proches, par des parties de bord avant parallèles au sens longitudinal, en formant ainsi une ligne brisée, les formes du bord avant du niveau inférieur de la demi-jonction mâle, du bord avant du niveau supérieur de la demi-jonction femelle et du bord avant du niveau inférieur de la demi-jonction femelle découlant, comme défini plus haut, de la forme du bord avant du niveau supérieur de la demi-jonction mâle, l'armature étant refendue longitudinalement sur les distances nécessaires pour former des replis décalés et les parties repliées décalées correspondant aux parties de bord avant décalées. On peut citer également des jonctions dans lesquelles le bord avant se présente sous forme de lignes brisées organisées selon différentes modalités expliquées plus loin en relation avec des formes de réalisation indiquées à titre d'exemple, le but général recherché étant de ne pas présenter aux racleurs des bords avant qui s'étendent sur des distances importantes dans le sens transversal, lesquels bords peuvent donner prise aux racleurs, ceci allant à l'encontre de l'un des buts principaux de la présente invention. Un exemple négatif de ce genre sera donné plus loin en rapport avec les explications concernant un dessin d'un tel exemple.

Mieux même des bords avant ne présentant que des lignes obliques par rapport au sens longitudinal risquent encore moins de donner prise aux racleurs. On en verra des exemples dans les formes de réalisation décrites plus loin.

Comme le montreront d'autres exemples, le déposant a également étudié des formes de bord avant dans lesquels la réalisation des replis de l'armature est assez simple, tout en procurant une forme ne donnant pas prise aux racleurs.

A ce sujet il faut rappeler, compte tenu du fait que, comme dit plus haut, on veille selon l'invention à ce que l'épaisseur des demi-jonctions imbriquées et assemblées ne dépasse pas celle des extrémités de bande transporteuse associées, théoriquement les racleurs ne devraient pas s'accrocher aux bords avant des demi-jonctions. Cependant des déplacements minimes des niveaux supérieurs des demi-jonctions sont possibles en cours de fonctionnement, c'est pourquoi le choix de formes comme celles étudiées par le déposant est important pour éviter de donner aux racleurs une prise, si faible soit telle.

Des formes de réalisation de l'invention particulièrement avantageuses sont présentées dans les dessins dans lesquels :
la figure 1 représente en perspective un exemple de forme de réalisation de jonction selon l'invention des extrémités de bande transporteuse, en situation sur un rouleau d'entraînement,
la figure 2 représente en perspective un autre exemple de réalisation de jonction selon l'invention et des extrémités de bande transporteuse, en situation sur un rouleau d'entraînement,
la figure 3 représente, vue en perspective, des parties d'armature repliées en vue d'être incorporées dans des demi-jonctions de formes complémentaires selon l'invention,
la figure 4 représente, en coupe longitudinale et de façon schématique, les éléments constituant deux demi-jonctions selon l'invention,
la figure 5 représente, en coupe longitudinale et de façon schématique, les éléments constituant deux demi-jonctions selon l'invention, à des stades différents d'insertion (figure 5a) des éléments et d'assemblage des deux demi-jonctions (figure 5b),
la figure 6 représente, en plan, une forme de réalisation de jonction selon l'invention à l'état assemblé dont la forme correspond à celle des armatures repliées de la figure 3,
la figure 7 représente, en perspective, la forme de réalisation de la figure 6, les deux demi-jonctions étant encore séparées,
les figures 8 et 9 représentent des parties d'armature repliées correspondant à d'autres formes de réalisation de demi-jonctions selon l'invention,
la figure 10 est une vue en perspective d'encore une autre forme de réalisation de jonction selon l'invention,
la figure 11 est une vue en perspective des armatures repliées et échancrées en vue d'être incorporées dans une jonction selon la figure 10,
la figure 12 est une vue en perspective d'encore une autre forme de réalisation d'une jonction selon l'invention,
la figure 13 est une vue en perspective des armatures repliées dans le but d'être incorporées dans une jonction selon la figure 12,
la figure 14 représente la jonction selon la figure 10, mais vue en plan,
la figure 15 représente la jonction selon la figure 12, mais vue en plan,
la figure 16 représente, en coupe longitudinale et agrandi, le système d'assemblage vis-insert-cuvette-insert-douille et l'implantation d'un insert-cuvette et d'un insert-douille dans les extrémités respectives de bande transporteuse.

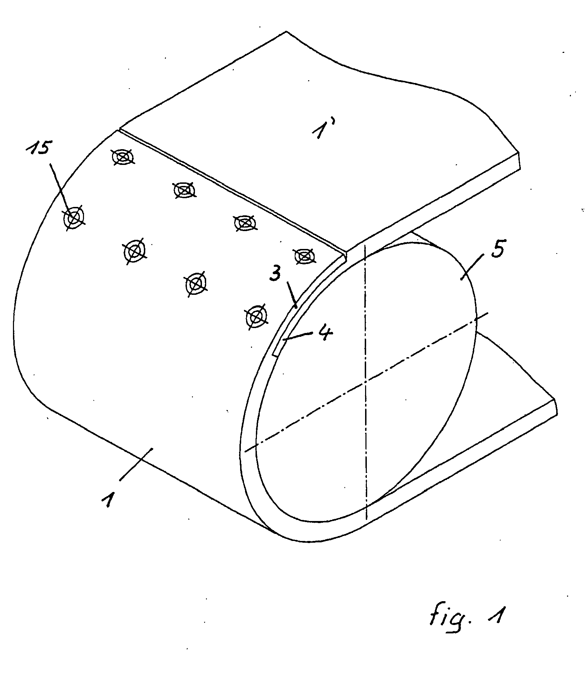

Sur la figure 1 un rouleau 5 sert à entraîner des extrémités 1, 1' de bande transporteuse, on remarque une demi-jonction mâle 3 et une demi-jonction femelle 4 assemblées au moyen de vis 15. Cette jonction ne montre que le principe général des jonctions selon l'invention car, comme déjà évoqué dans ce qui précède, elle présente une partie avant de la demi-jonction mâle 3 qui s'étend sur toute la largeur et qui, de ce fait, peut facilement être accrochée par les racleurs.

La figure 2, représente une autre jonction selon l'invention, plus élaborée, dans la même situation que la jonction de la figure 1. On remarque que le bord avant de la demi-jonction mâle 3 présente des parties décalées dans le sens longitudinal qui permettent d'éviter de donner éventuellement prise aux racleurs sur une partie trop importante de la largeur au même instant.

La figure 3 représente en perspective les parties d'armatures repliées 7, repliées sur les armatures 6 au niveau des replis 8 décalés longitudinalement venant des extrémités de bande transporteuse (non représentées), les armatures étant refendues longitudinalement pour permettre ces décalages.

La figure 4 représente, en coupe longitudinalement et schématiquement, les éléments des demi-jonctions : les inserts-cuvettes 13, la couche supérieure de matière constitutive 10, les armatures repliées 6, 7, les replis 8, les couches inférieures de matière constitutive 11, une fine couche intermédiaire 12 entre les armatures repliées 6, 7 des deux demi-jonctions, les inserts-douilles 14, leur douille 14", leur collerette 14', les vis 15 servant à l'assemblage étant représentées au-dessus des inserts-cuvettes 13.

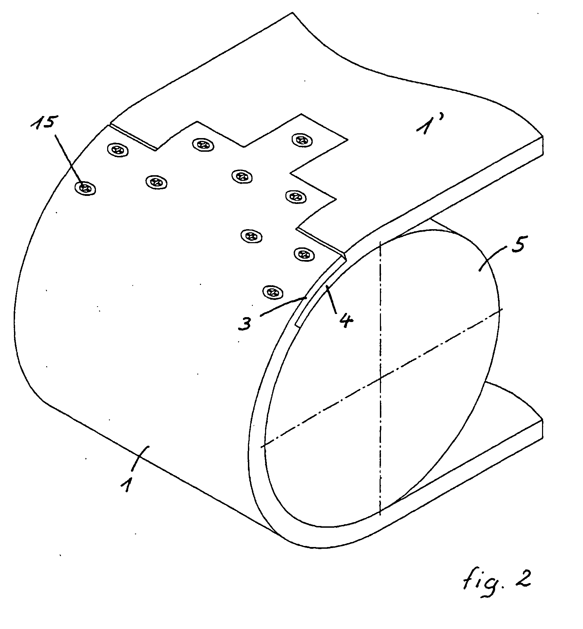

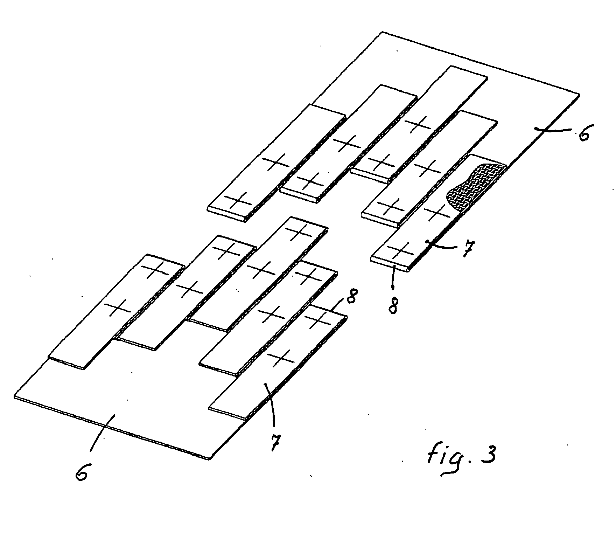

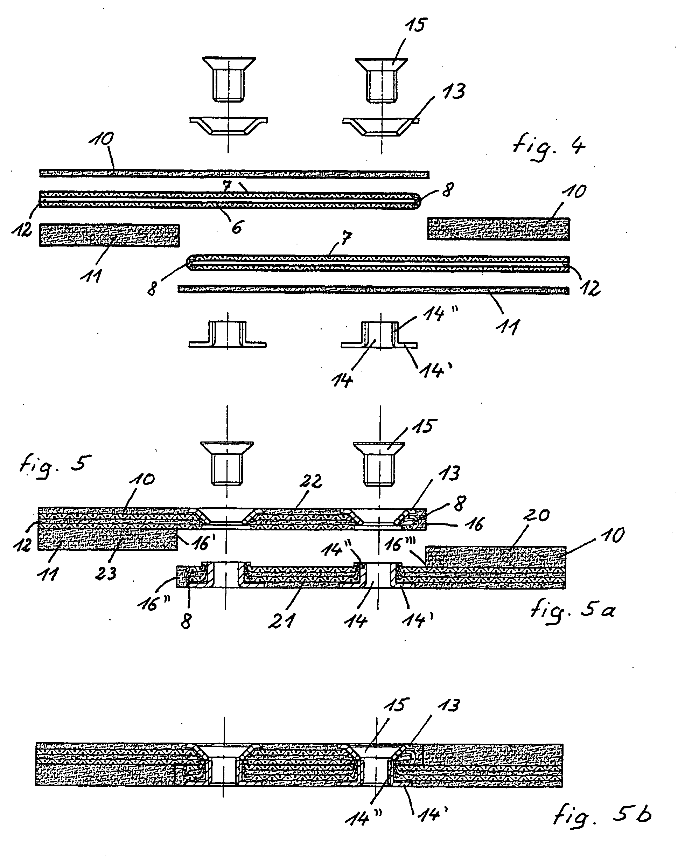

Les figures 5a et 5b représentent les mêmes éléments, portant les mêmes références numériques, les inserts-cuvettes et les inserts-douilles étant pris dans les couches vulcanisées de matière vulcanisée et d'armature et les demi-jonctions étant prêtes à être assemblées sur la figure 5a, et étant assemblées sur la figure 5b.

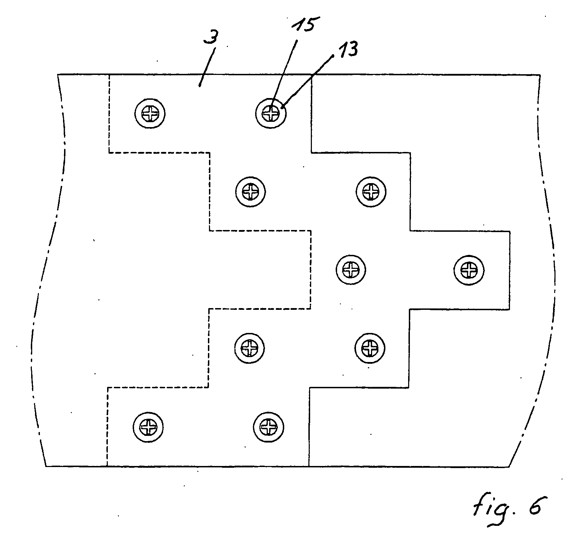

Sur la figure 6, représentant en plan une jonction assemblée, on reconnaît la surface supérieure de la demi-jonction mâle 3 ainsi que les vis 15 et les inserts-cuvettes 13.

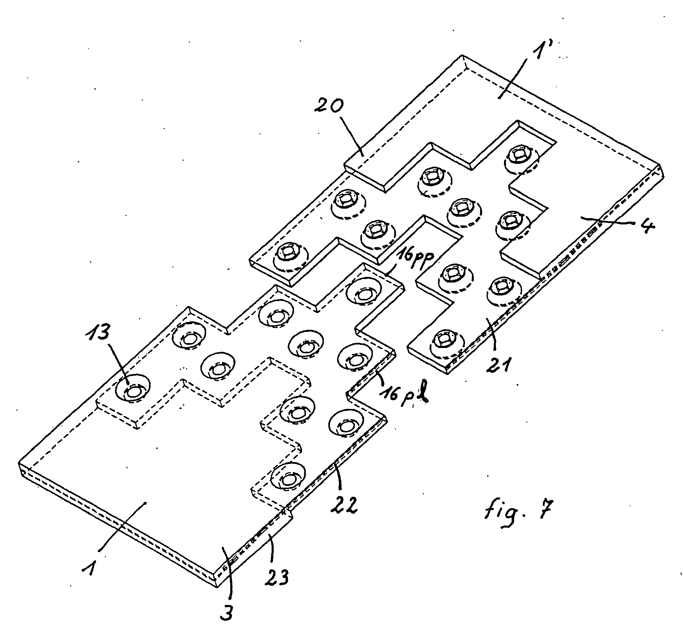

Sur la figure 7, représentant en perspective une forme de réalisation, on remarque des parties de bord avant 16pp perpendiculaires au sens longitudinal de demi-jonction mâle 3, des parties de bord avant 16pℓ parallèles au sens longitudinal de demi-jonction mâle 3, un niveau supérieur 22 de demi-jonction mâle 3, un niveau inférieur 23 de demi-jonction mâle ainsi que du côté de la demi-jonction femelle 4 de forme complémentaire à celle de la demi-jonction mâle 3, les niveaux supérieur 20, et inférieur 21 de demi-jonction femelle, et enfin les extrémités de rattachement 1, 1'.

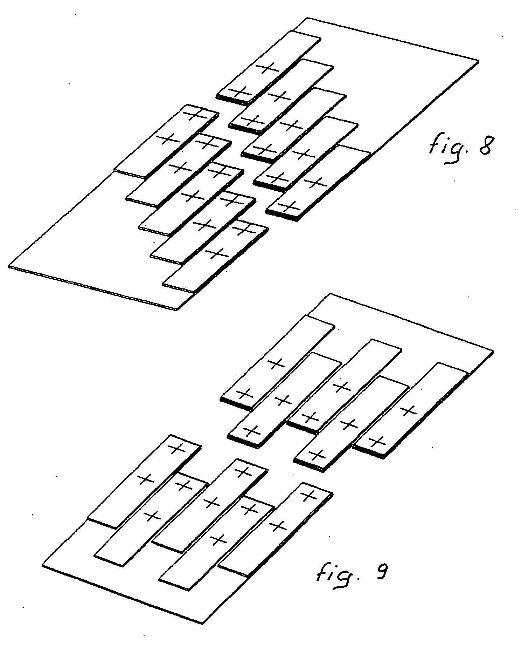

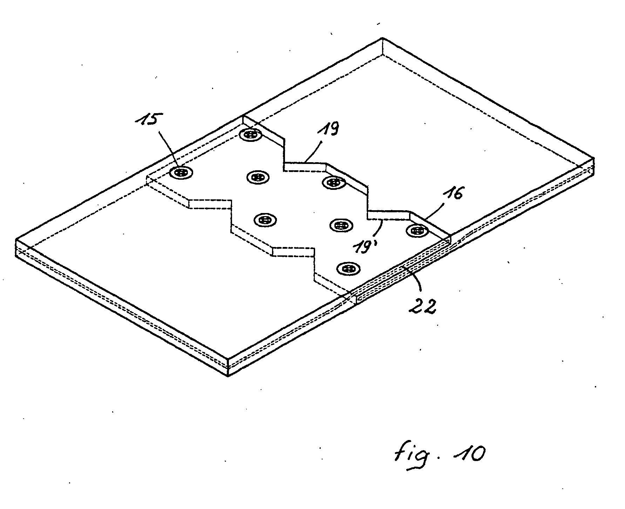

Sur les figures 8 et 9 on peut voir deux autres façons de replier les armatures correspondant respectivement à deux autres formes de bord avant de la même famille que celle de la figure 3.

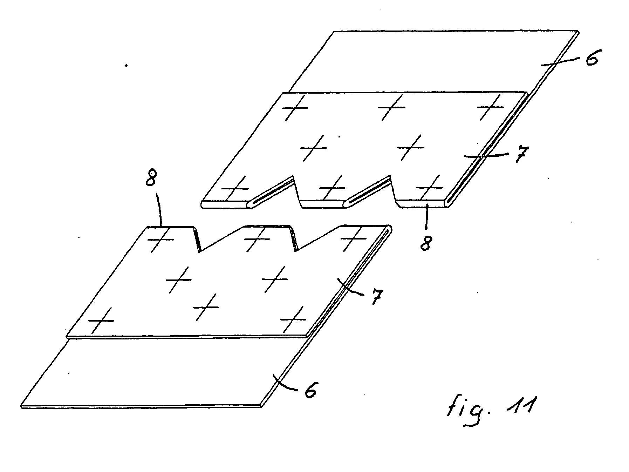

Sur la figure 10 est représentée en perspective une autre forme de réalisation, vue en perspective.

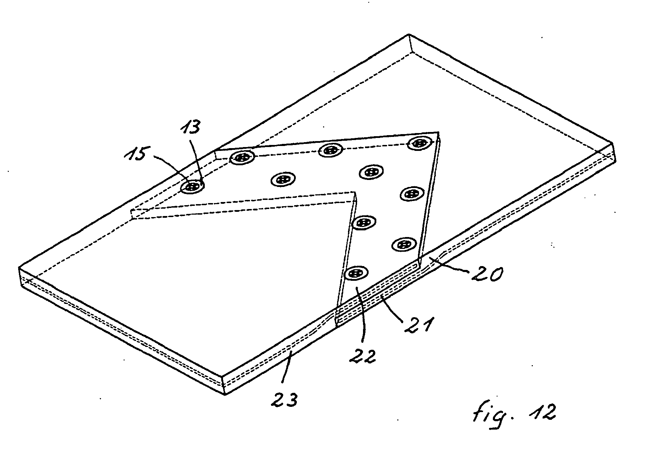

Sur la figure 11 sont représentées les armatures repliées, qui correspondent à la forme de réalisation représentée sur la figure 10. Dans cette forme de réalisation représentée terminée et assemblée sur la figure 10, le bord avant 16 du niveau supérieur 22 de la demi-jonction mâle 3 est globalement perpendiculaire au sens longitudinal, à l'exception de deux échancrures 19, 19' en forme de V pratiquées de telle sorte que la pointe du V soit orientée vers l'arrière. On remarque une forme correspondante sur la figure 11, l'armature étant repliée et échancrée selon une forme identique à celle du bord avant terminé et étant située en retrait vers l'arrière dans la demi-jonction mâle terminée. Le dessin ne représente que deux formes de V mais, selon la largeur de l'extrémité de bande transporteuse, on peut naturellement en prévoir une seule ou un nombre supérieur à deux de pointes en forme de V. Le bord du niveau supérieur de la demi-jonction femelle dont la matière constitutive est en continuité avec celle de l'extrémité de bande transporteuse correspondante présente, une forme complémentaire de celle du bord avant du niveau supérieur de la demi-jonction mâle 3.

On remarque les pointillés figurant à la fois le bord avant du niveau inférieur de la demi-jonction femelle 4 et le bord avant du niveau inférieur de la demi-jonction mâle 3. De façon analogue, le bord de la partie inférieure de la demi-jonction mâle dont la matière constitutive est en continuité avec celle de l'extrémité de bande transporteuse correspondante a une forme complémentaire de celle du bord avant de la demi-jonction femelle. Les vis d'assemblage 15 sont implantées, ainsi que les inserts-cuvettes et les inserts-douilles sur une distance qui peut être accrue compte tenu de la forme particulière de cette forme de réalisation, ce qui signifie qu'un plus grand nombre de vis peut être implanté tant dans le sens longitudinal que dans le sens transversal en augmentant la dimension des demi-jonctions mâle et femelle dans le sens longitudinal.

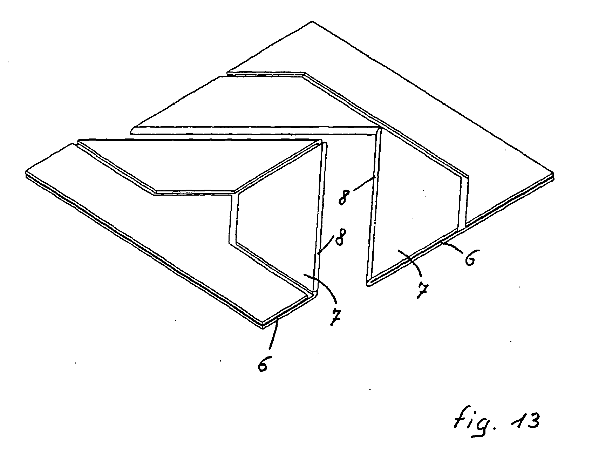

Sur la figure 12 est représentée encore une autre forme de réalisation.

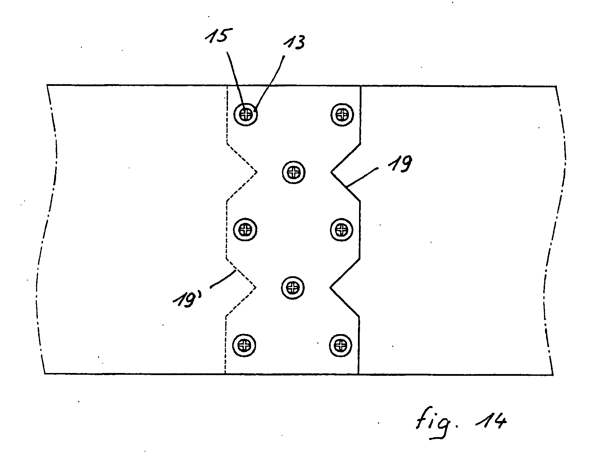

La figure 13 représente les armatures repliées qui correspondent à la forme de réalisation représentée sur la figure 12.

On remarque que le bord avant du niveau supérieur 22 de la demi-jonction mâle est vu en plan en forme de V, la pointe du V étant orientée vers l'avant, les formes de bords avant du niveau inférieur 23 de la demi-jonction mâle 3 dont la matière constitutive est en continuité avec celle de la demi-extrémité correspondante, et du niveau supérieur 20 de la demi-jonction femelle 4 dont la matière constitutive est en continuité avec celle de la demi-extrémité correspondante, découlant de la forme du bord avant du niveau supérieur 22 de la demi-jonction mâle 3 comme défini plus haut.

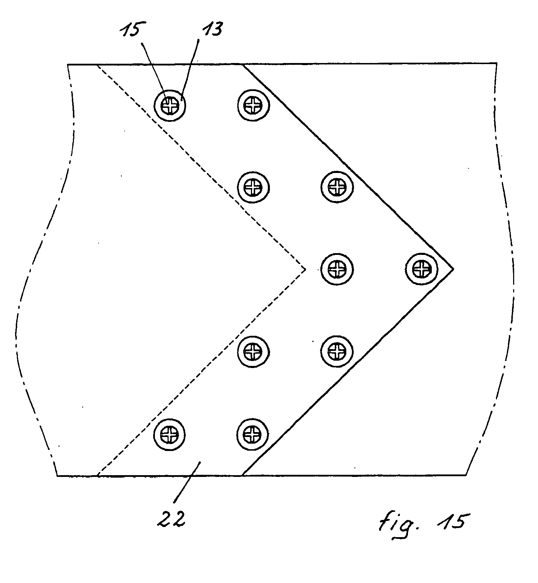

Sur la figure 14, on reconnaît les vis 15, les inserts-cuvettes 13, les échancrures 19, 19' de la jonction de la figure 10, vue en plan.

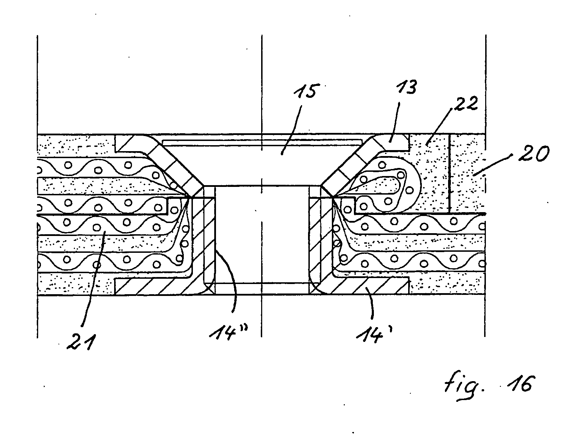

Sur la figure 15, on reconnaît les inserts-cuvettes 13 et la forme en V du niveau supérieur 22 de la demi-jonction mâle, de la figure 12, vue en plan.

Enfin sur la figure 16 qui est un agrandissement d'une coupe longitudinale du système d'assemblage vis-insert-cuvette-insert-douille on reconnaît la vis 15, l'insert-cuvette 13, le niveau supérieur 22 de la demi-jonction mâle, le niveau supérieur 20 de la demi-jonction femelle, le niveau inférieur 21 de la demi-jonction femelle, l'insert-douille 14, sa douille 14" et sa collerette 14'. On remarque également dans chaque demi-jonction, les couches supérieures repliées et les couches inférieures, lesdites couches étant relevées le long de la douille et abaissées le long de la cuvette.

La présente invention a été décrite à l'aide de diverses formes de réalisation servant d'exemples, cependant elle ne se limite pas aux exemples représentés et décrits. Sa portée s'étend au contenu des revendications, soutenu par le texte complet de la partie description.

## Revendications

1. Jonction pour bande transporteuse, constituée de deux demi jonctions (3, 4), en caoutchouc vulcanisé ou en matière plastique, solidarisées chacune respectivement avec une extrémité (1, 1') de bande transporteuse, les demi-jonctions (3, 4) ayant une forme généralement plate et une épaisseur maximum égale ou légèrement inférieure à celle de l'extrémité (1, 1') de bande transporteuse avec laquelle elle est solidarisée et présentant des formes complémentaires leur permettant d'être imbriquées pour former la jonction dont l'épaisseur est au maximum égale à celle de l'extrémité (1, 1') de bande transporteuse, lesdites deux demi-jonction (3, 4) comportant une armature (6) souple, textile ou autre, **caractérisée en ce que** les dites deux demi- jonctions sont respectivement munies d'inserts-cuvettes (13) et d'inserts du type douille (14) permettant le passage de moyens d'assemblage (15), du type à tige, disposés perpendiculairement au plan général de la jonction,
- la solidarisation de chacune des deux demi-jonctions (3, 4) avec l'extrémité correspondante de bande transporteuse est réalisée d'une part au moyen des armatures souples (6), textiles ou autres, des extrémités correspondantes (1 ou 1') de bande transporteuse, chacune des armatures (6) se prolongeant à l'intérieur de chaque demi-jonction (3, ou 4) en formant un repli (8) du côté du bord libre, ou bord avant de chacune des demi-jonctions (3, ou 4) à proximité dudit bord libre, les demi-jonctions mâles (3) comportant deux niveaux, un niveau supérieur (22) et un niveau inférieur (23), le niveau supérieur (22) contenant l'armature repliée et le niveau inférieur (23) ne comportant que de la matière constitutive, dont le bord avant (16') a sensiblement la même forme que le bord avant (16) du niveau supérieur (22), mais avec un décalage vers l'arrière correspondant au minimum à la distance séparant du bord avant (16) les inserts-cuvettes (13) les plus éloignés du bord avant (16), et les demi-jonctions femelles (4) comportant deux niveaux, un niveau supérieur (20) ne comportant que de la matière constitutive et dont le bord avant (16"') a une forme complémentaire de celle du bord avant (16) des demi-jonctions mâles correspondantes, et un niveau inférieur (21) contenant l'armature repliée (6, 7) et les inserts-douilles (14), dont le bord avant (16") est décalé vers l'avant par rapport au bord avant (16"') du niveau supérieur (20), sa forme étant complémentaire de celle du bord avant du niveau inférieur (23) de la demi-jonction mâle,
- la solidarisation des demi-jonctions mâle (3) et femelle (4) l'une avec l'autre est effectuée au moyen d'éléments d'assemblage à tige par exemple des rivets ou des crampons, mais de préférence au moyen de vis (15) dont la tête est en appui sur le fond des inserts-cuvettes (13) et dont le filetage est vissé dans des inserts-douilles (14) correspondants, filetés intérieurement, ou bien lisses dans le cas où les vis sont auto-taraudeuses, la tête des vis (15) et leur extrémité opposée ne dépassant pas au-delà des surfaces extérieures des demi-jonctions à l'endroit où les vis sont implantées.

2. Jonction pour bande transporteuse selon la revendication 1, **caractérisée en ce que** les extrémités de bande transporteuse (1, 1') réalisées simultanément à la réalisation des demi-jonctions mâle (3) et femelle (4), sont, au stade de la réalisation des demi-jonctions, encore indépendantes d'une bande transporteuse.

3. Jonction pour bande transporteuse selon la revendication 1, **caractérisée en ce que** les inserts-douilles (14) sont implantés dans les demi-jonctions femelles (4) de façon telle que la douille (14") entraîne les bords du trou des deux parties d'armature (6, 7) entourant la douille perpendiculairement au plan général de ces couches et sont de ce fait solidarisés avec la demi-jonction femelle (4) dans deux plans perpendiculaires par la matière constitutive et par les parties d'armature qui les entourent.

4. Jonction pour bande transporteuse selon la revendication 3, **caractérisée en ce que** les inserts-douilles comportent une partie formant une collerette plate (14') solidaire de la partie douille proprement dite et disposée perpendiculairement à l'extrémité de la douille (14") qui est la plus proche de la surface extérieure du niveau inférieur (21) de la demi-jonction femelle (4) correspondante, en n'étant séparée de cette surface que par une mince couche de matière constitutive, ces collerettes s'étendant dans un plan parallèle au plan général de la demi-jonction et étant solidarisées avec la matière constitutive qui les entoure.

5. Jonction pour bande transporteuse selon la revendication 4, **caractérisée en ce que** les inserts-cuvettes (13) sont implantés dans les demi-jonctions mâles (3) de façon telle que la cuvette s'appuie étroitement par ses parties bordant le trou central contre les bords du trou pratiqué dans deux parties d'armature (6, 7), avec lesquelles elle est solidarisée par la matière constitutive environnante.

6. Jonction pour bande transporteuse selon l'une quelconque des revendications qui précèdent, **caractérisée en ce que** le bord avant (16) du niveau supérieur (22) de la demi-jonction mâle est constitué d'une suite de parties (16pp) de bord avant perpendiculaires au sens longitudinal de la demi-jonction mâle, décalées les unes par rapport aux autres dans le sens longitudinal et des parties de bords s'étendant longitudinalement, chacune de ces parties (16pp) de bord avant perpendiculaires au sens longitudinal étant reliée à la partie, ou aux parties, de bord avant perpendiculaires au sens longitudinal décalée(s) vers l'arrière, la plus proche, ou les plus proches, par des parties (16pl) de bord avant parallèles au sens longitudinal, en formant ainsi une ligne brisée, les formes du bord avant du niveau inférieur (23) de la demi-jonction mâle (3), du bord avant du niveau supérieur (20) de la demi-jonction femelle (4) et du bord avant du niveau inférieur (21) de la demi-jonction femelle découlant, comme défini dans la revendication de rattachement, de la forme du bord avant du niveau supérieur (22) de la demi-jonction mâle (3), l'armature (6) étant refendue longitudinalement sur les distances nécessaires pour former des replis décalés et les parties repliées décalées correspondant aux parties de bord avant décalées.

7. Jonction pour bande transporteuse selon la revendication 6, **caractérisée en ce que** le bord avant de la demi-jonction mâle (3) a, vu en plan, une forme de ligne brisée disposée globalement obliquement en travers de la demi-jonction.

8. Jonction pour bande transporteuse selon la revendication 6, **caractérisée en ce que** le bord avant de la demi-jonction mâle (3) a, vu en plan, une forme de ligne brisée globalement disposée en V, la pointe étant orientée vers l'avant.

9. Jonction pour bande transporteuse selon la revendication 6, **caractérisée en ce que** le bord avant de la demi-jonction mâle (3) comporte alternativement des premières parties (16pp) de bord avant perpendiculaires au sens longitudinal et des deuxièmes parties (16pp) de bord avant perpendiculaires au sens longitudinal décalées vers l'arrière par rapport aux premières parties (16pp) de bord avant.

10. Jonction pour bande transporteuse selon l'une quelconque des revendications 1 à 5, **caractérisée en ce que** le bord avant du niveau supérieur (22) de la demi-jonction mâle (3) a une forme de V dont les branches sont des lignes droites, la pointe du V étant orientée vers l'avant, les formes du bord avant du niveau inférieur (23) de la demi-jonction mâle (3), du bord avant du niveau supérieur (20) de la demi-jonction femelle (4) et du bord avant du niveau inférieur (21) de la demi-jonction femelle découlant de la forme du bord avant du niveau supérieur de la demi-jonction mâle, et les replis de l'armature (6) étant disposés obliquement par rapport au sens longitudinal, en suivant en retrait les branches de V de la forme des bords avant.

11. Jonction pour bande transporteuse selon l'une quelconque des revendications 1 à 5, **caractérisée en ce que** le bord avant du niveau supérieur (22) de la demi-jonction mâle (3) est globalement perpendiculaire au sens longitudinal, à l'exception d'une ou de plusieurs échancrures (19, 19') en forme de V, la pointe du V étant orientée vers l'arrière, ou de forme courbe concave, les parties d'armature (6 et 7) étant échancrées elles aussi en suivant en retrait la forme des échancrures du bord avant du niveau supérieur (22) de la demi-jonction mâle (3), les formes de bords avant du niveau inférieur (23) de la demi-jonction mâle (3) et du niveau supérieur (20) et du niveau inférieur (21) de la demi-jonction femelle (4) découlant de la forme du bord avant du niveau supérieur (22) de la demi-jonction mâle (3) et les parties d'armature (6 et 7) du niveau inférieur (21) de la demi-jonction femelle (4) étant échancrées en suivant en retrait la forme des échancrures du bord avant de ce niveau inférieur (21) de la demi-jonction femelle (4).

## Claims

1. A joint for a conveyor belt composed of two half-joints (3, 4) made of vulcanized rubber or plastic material, each one being respectively assembled to one end (1, 1') of the conveyor belt, the half-joints (3, 4) having a generally flat shape and a maximum thickness equal to or slightly lower than that of the end (1, 1') of the conveyor belt which they are assembled to, and having complementary shapes which allow them to be interleaved so as to make the joint whose thickness is at most equal to that of the end (1, 1') of the conveyor belt, said two half-joints (3, 4) including a flexible reinforcement, made of fabric or any other material, **characterised in that** said two half-joints are respectively provided with cup-shaped inserts (13), and socket-type inserts (14) allowing for the passage of rod-type assembling means (15), positioned perpendicularly to the joint general plan,
- the assembling of each of the two half-joints (3, 4) with the corresponding end of the conveyor belt is obtained partly using flexible reinforcements (6), made of fabric or any other material, of the corresponding ends (1 or 1') of the conveyor belt, each one of the reinforcements (6) extending inside each half-joint (3, or 4) and forming a fold (8) on the free edge side, or front edge of each half-joint (3, or 4) close to said free edge, the male half-j oints (3) having two levels, one upper level (22) and one lower level (23), the upper level (22) containing the folded reinforcement and the lower level (23) containing only constituent material, whose front edge (16') has substantially the same shape as the front edge (16) of the upper level (22), but showing a shift rearwards which corresponds at least to the distance separating, from the front edge (16), the cup-shaped inserts (13) which are the farthest away from the front edge (16) and the female half-joints (4) having two levels, one upper level (20) containing only constituent material, and whose front edge (16") has a shape complementary to that of the front edge (16) of the corresponding male half-joint and a lower level (21) containing the folded reinforcement (6, 7) and the socket-type inserts (14), whose front edges (16") are shifted forwards with respect to the front edge (16"') of the upper level (20), its shape being complementary to that of the front edge of the lower level (23) of the male half-joint,
- the assembling of male (3) and female half-joints is performed using rod-type assembling elements such as for example rivets or staples, but preferably using screws (15) whose heads are resting on the bottom of the cup-shaped inserts (13)and whose threads are screwed into the corresponding socket-type inserts (14) which are internally threaded, or smooth if the screws are cutting screws, the screw heads (15) and their opposite ends being flush with the half-joints external surfaces at their positions.

2. A joint for a conveyor belt according to claim 1, **characterised in that** the ends of the conveyor belt (1, 1') which are made simultaneously with the male (5") and female (4) half-joints are still independent from a conveyor belt when the half-joints are made.

3. A joint for a conveyor belt according to claim 1, **characterised in that** the socket-type inserts (14) are so fitted into the female half-joints (4) that the socket (14") carries on the edges of the hole provided in the two reinforcement portions (6, 7) which encompass the socket perpendicularly to the general plan of such layers, and are thus assembled with the female half-joint (4) along two perpendicular plans, by the constituent material and by the reinforcement portions which encompass them.

4. A joint for a conveyor belt according to claim 3, **characterised in that** the socket-type inserts comprise a flat collar part (14') assembled with the socket part proper, and positioned perpendicularly to the socket end (14") which is the closest to the external surface of the lower level (21) of the corresponding female half-joint (4), while being separated from this surface by a thin layer of constituent material, such collars extending in a plan parallel to the general plan of the half-joint and being assembled with the constituent material encompassing them.

5. A joint for a conveyor belt according to claim 4, **characterised in that** the cup-shaped inserts (13) are so fitted into the male (3) half-joint that the cup rests, through the portions thereof bordering the central hole, against the edges of the hole provided in two reinforcement portions (6, 7), with which it is assembled by the surrounding constituent material.

6. A joint for a conveyor belt according to any one of the preceding claims, **characterised in that** the front edge (16) of the upper level (22) of the male half-joint is composed of a series of front edge portions (16pp) perpendicular to the longitudinal direction of the male half-joint, shifted with respect to one another in the longitudinal direction and portions of edges extending longitudinally, each one of such front edge portions (16pp) perpendicular to the longitudinal direction being connected to the closest front edge portion, or portions perpendicular to the longitudinal direction and shifted rearwards, by front edge portions (16pl) parallel to the longitudinal direction and thus forming a broken line, the shapes of the front edge of the lower level (23) of the male half-joint (3), of the front edge of the upper level (20) of the female half-joint (4) and of the front edge of the lower level (21) of the female half-joint resulting, as defined in the dependant claim, from the shape of the front edge of the upper level (22) of the male half-joint (3), the reinforcement (6) being slit longitudinally on the distances required for forming shifted folds and the folded portions corresponding to the shifted front edge portions.

7. A joint for a conveyor belt according to claim 6, **characterised in that** the front edge of the male half-joint (3) has, from a plan view, the shape of a broken line substantially positioned diagonally through the half-joint.

8. A joint for a conveyor belt according to claim 6, **characterised in** the front edge of the male half-joint (3) has, from a plan view, the shape of a broken line substantially positioned in V, whose tip is directed forwards.

9. A joint for a conveyor belt according to claim 6, **characterised in that** the front edge of the male half-joint (3) comprises alternately first front edge portions (16pp) perpendicular to the longitudinal direction and second front edge portions (16pp) perpendicular to the longitudinal direction, shifted rearwards with respect to the first front edge portions (16pp).

10. A joint for a conveyor belt according to any one of the preceding claims 1 to 5, **characterised in that** the front edge of the upper level (22) of the male half-joint (3) is shaped as a V whose branches are straight lines, the tip of the V being directed forwards, the shapes of the front edge of the lower level (23) of the male half-joint (3), of the front edge of the upper level (20) of the female half-joint (4) and of the front edge of the lower level (21) of the female half-joint resulting from the shape of the front edge of the upper level of the male half-joint and the folds of the reinforcement (6) being positioned diagonally with respect to the longitudinal direction while following somewhat behind the branches of the V, of the front edge shape.

11. A joint for a conveyor belt according to any one of the preceding claims I to 5, **characterised in that** the front edge of the upper level (22) of the male half-joint (3) is substantially perpendicular to the longitudinal direction, except for one or more V-shaped notches (19, 19') the tip of the V being directed rearwards, or curved concave notches, the reinforcement portions being notched too, while following somewhat behind the notches of the front edge of the upper level (22) of the male half-joint (3), the shapes of the front edge of the lower level (23) of the male half-joint (3) and of the upper level (20) and of the lower level (21) of the female half-joint (4) resulting from the shape of the front edge of the upper level (22) of the male half-joint (3) and the reinforcement portions (6 et 7) of the lower level (21) of the female half-joint (4) being notched while following somewhat behind the shapes of the notches of the front edge of such lower level (21) of the female half-joint (4).

## Patentansprüche

1. Verbindung für Förderband, die aus zwei Verbindungshälften (3, 4) aus vulkanisiertem Gummi oder aus Kunststoff besteht, die jeweils mit einem Ende (1, 1') des Förderbandes fest verbunden sind, wobei die Verbindungshälften (3, 4) eine allgemein flache Form und eine Dicke von maximal gleich oder etwas unter derjenigen des Endes (1, 1') des Förderbandes haben, mit dem sie fest verbunden sind, und sich gegenseitig ergänzende Formen aufweisen, mit denen sie schuppenförmig angeordnet werden können, um die Verbindung herzustellen, deren Dicke höchstens gleich derjenigen des Endes (1, 1') des Förderbandes ist, wobei die besagten Verbindungshälften (3, 4) eine weiche textilartige oder andere Bewehrung (6) umfassen, **dadurch gekennzeichnet, daß** die besagten Verbindungshälften mit Schaleneinsätzen (13) beziehungsweise hülsenartigen (14) Einsätzen versehen sind, die den Durchgang von Montagemitteln (15) von der Art eines Stabs erlauben, die senkrecht zur allgemeinen Ebene der Verbindung angeordnet sind.
- Die feste Verbindung jeder der beiden Verbindungshälften (3, 4) mit dem entsprechenden Ende des Förderbandes wird einerseits vermittels von weichen textilartigen oder anderen Bewehrungen (6) der entsprechenden Enden (1 oder 1') des Förderbandes realisiert, wobei jede Bewehrung (6) sich im Innern jeder Verbindungshälfte (3 oder 4) fortsetzt und dabei an der Seite der freien Kante oder der Vorderkante jeder der Verbindungshälften (3 oder 4) in der Nähe der besagten freien Kante einen Falz (8) bildet, wobei die Einsteck-Verbindungshälften (3) zwei Ebenen umfassen, eine obere Ebene (22) und eine untere Ebene (23) wobei die obere Ebene (22) die gefalzte Bewehrung umfaßt und die untere Ebene (23) nur das konstitutive Material, deren Vorderkante (16') deutlich die gleiche Form hat wie die Vorderkante (16) der oberen Ebene (22), jedoch mit einer Verschiebung nach hinten, die mindestens dem Abstand entspricht, der die von der Vorderkante (16) am meisten entfernten Schaleneinsätze (13) von der Vorderkante (16) trennt, und wobei die Aufnahme-Verbindungshälften (4) zwei Ebenen umfassen, eine obere Ebene (20), die nur konstitutives Material umfaßt, und deren Vorderkante (16"') eine ergänzende Form zu derjenigen der Vorderkante (16) der entsprechenden Einsteck-Verbindungshälften hat, und eine untere Ebene (21), die die gefalzte Bewehrung (6, 7) und die Hülseneinsätze (14) umfaßt, deren Vorderkante (16") gegenüber der Vorderkante (16"') der oberen Ebene (20) nach vorne verschoben ist, wobei ihre Form diejenige der Vorderkante der unteren Ebene (23) der Einsteck-Verbindungshälfte ergänzt;
- Die feste Verbindung der Einsteck- (3) und der Aufnahmebewehrungen (4) miteinander wird vermittels von Montageelementen mit Stäben hergestellt, zum Beispiel mit Nieten oder Klammern, bevorzugt jedoch vermittels von Schrauben (15), deren Kopf auf dem Boden der Schaleneinsätze (13) aufliegt, und deren Gewinde in entsprechende Hülseneinsätze (14) eingeschraubt ist, die ein Innengewinde aufweisen oder bei selbstschneidenden Schrauben auch glatt sind, wobei die Schraubenköpfe (15) und ihr entgegengesetztes Ende nicht an der Stelle über die Außenflächen der Verbindungshälften hinausstehen, an der die Schrauben vorhanden sind.

2. Verbindung für Förderband nach Anspruch 1, **dadurch gekennzeichnet, daß** die bei der Realisierung der Einsteck- (3) und der Aufnahme-Verbindungshälften (4) gleichzeitig ausgeführten Förderbandenden (1, 1') im Stadium der Realisierung der Verbindungshälften noch unabhängig von einem Förderband sind.

3. Verbindung für Förderband nach Anspruch 1, **dadurch gekennzeichnet, daß** die Hülseneinsätze (14) so in die Aufnahme-Verbindungshälften (4) eingesetzt werden, daß die Hülse (14'') die Kanten des Lochs der beiden Bewehrungsteile (6, 7) mitführt, die die Hülse senkrecht zur allgemeinen Ebene dieser Schichten umgeben, und daher in zwei senkrechten Ebenen mit der Aufnahme-Verbindungshälfte (4) durch das konstitutive Material und durch die sie umgebenden Bewehrungsteile fest verbunden sind.

4. Verbindung für Förderband nach Anspruch 3, **dadurch gekennzeichnet, daß** die Hülseneinsätze einen Teil umfassen, der einen flachen Kragen (14') bildet, der fest mit dem eigentlichen Hülsenteil verbunden ist und senkrecht zum Ende der Hülse (14") angeordnet ist, die der äußeren Fläche der unteren Ebene (21) der entsprechenden Aufnahme-Verbindungshälfte (4) am nächsten liegt, indem sie nur durch eine dünne Schicht konstitutiven Materials von dieser Fläche getrennt ist, wobei sich diese Kragen in einer parallel zur allgemeinen Ebene der Verbindungshälfte liegenden Ebene erstrecken und mit dem sie umgebenden konstitutiven Material fest verbunden sind.

5. Verbindung für Förderband nach Anspruch 4, **dadurch gekennzeichnet, daß** die Schaleneinsätze (13) so in den Einsteck-Verbindungshälften (3) eingesetzt sind, daß die Schale mit ihren das mittlere Loch einfassenden Teilen eng an den Kanten des Lochs anliegt, das in zwei Bewehrungsteilen (6, 7) gestaltet ist, mit denen sie durch das umgebende konstitutive Material fest verbunden ist.

6. Verbindung für Förderband nach einem beliebigen der vorstehenden Ansprüche, **dadurch gekennzeichnet, daß** die Vorderkante (16) der oberen Ebene (22) der Einsteck-Verbindungshälfte aus einer Folge von Teilen (16pp) der Vorderkante besteht, die senkrecht zur Längsrichtung der Einsteck-Verbindungshälfte verlaufen, und die im Verhältnis zueinander in Längsrichtung verschoben sind, und aus Kantenteilen, die sich längs erstrecken, wobei jeder dieser senkrecht zur Längsrichtung stehenden Vorderkantenteile (16pp) mit dem/den am nächsten liegenden nach hinten verschobenen Teil(en) verbunden ist, und zwar durch parallel zur Längsrichtung stehende Teile (pl) der Vorderkante, indem sie somit eine gebrochene Linie bilden, wobei sich die Formen der Vorderkante der unteren Ebene (23) der Einsteck-Verbindungshälfte (3), der Vorderkante der oberen Ebene (20) der Aufnahme-Verbindungshälfte (4) und der Vorderkante der unteren Ebene (21) wie im anhängenden Patentanspruch definiert aus der Form der Vorderkante der oberen Ebene (22) der Einsteck-Verbindungshälfte (3) ergeben, wobei die Bewehrung (6) über die erforderlichen Abstände längsgeteilt wird, die zur Bildung der verschobenen Falze notwendig sind, und wobei die verschobenen gefalzten Teile den verschobenen Vorderkantenteilen entsprechen.

7. Verbindung für Förderband nach Anspruch 6, **dadurch gekennzeichnet, daß** die Vorderkante der Einsteck-Verbindungshälfte (3) auf einer Plansicht gesehen eine Form einer gebrochenen Linie hat, die insgesamt schräg durch die Verbindungshälfte angeordnet ist.

8. Verbindung für Förderband nach Anspruch 6, **dadurch gekennzeichnet, daß** die Vorderkante der Einsteck-Verbindungshälfte (3) auf einer Plansicht gesehen eine Form einer gebrochenen Linie hat, die insgesamt wie ein V angeordnet ist, wobei die Spitze nach vorne ausgerichtet ist.

9. Verbindung für Förderband nach Anspruch 6, **dadurch gekennzeichnet, daß** die Vorderkante der Einsteck-Verbindungshälfte (3) abwechselnd erste Vorderkantenteile (16pp) senkrecht zur Längsrichtung umfaßt und zweite Vorderkantenteile (16 pp) senkrecht zur Längsrichtung und im Vergleich zu den ersten Vorderkantenteilen (16pp) nach hinten verschoben.

10. Verbindung für Förderband nach einem beliebigen der vorstehenden Ansprüche 1 bis 5, **dadurch gekennzeichnet, daß** die Vorderkante der oberen Ebene (22) der Einsteck-Verbindungshälfte (3) die Form eines "V" hat, dessen Zweige gerade Linien sind, wobei die Spitze des "V" nach vorne gerichtet ist, wobei sich die Formen der Vorderkante der unteren Ebene (23) der Einsteck-Verbindungshälfte (3), der Vorderkante der oberen Ebene (20) der Aufnahme-Verbindungshälfte (4) und der Vorderkante der unteren Ebene (21) der Aufnahme-Verbindungshälfte aus der Form der Vorderkante der oberen Ebene der Einsteck-Verbindungshälfte ergeben, und wobei die Falze der Bewehrung (6) gegenüber der Längsrichtung schräg angeordnet sind und dabei mit einem Rücksprung den Zweigen des "V" der Form der Vorderkanten folgen.

11. Verbindung für Förderband nach einem beliebigen der vorstehenden Ansprüche 1 bis 5, **dadurch gekennzeichnet, daß** die Vorderkante der oberen Ebene (22) der Einsteck-Verbindungshälfte (3) insgesamt senkrecht zur Längsrichtung steht, mit Ausnahme eines oder mehrerer Ausschnitte (19, 19') in Form eines "V", wobei die Spitze des "V" nach hinten gerichtet ist, oder in einer gekrümmten konkaven Form, wobei die Bewehrungsteile (6 und 7) ebenfalls ausgeschnitten sind und mit einem Rücksprung den Formen der Ausschnitte der Vorderkante der oberen Ebene (22) der Einsteck-Verbindungshälfte (3) folgen, wobei sich die Formen der Vorderkanten der unteren Ebene (23) der Einsteck-Verbindungshälfte (3) und der oberen Ebene (20) und der unteren Ebene (21) der Aufnahme-Verbindungshälfte (4) aus der Form der Vorderkante der oberen Ebene (22) der Einsteck-Verbindungshälfte (3) ergeben, und wobei die Bewehrungsteile (6 und 7) der unteren Ebene (21) der Aufnahme-Verbindungshälfte (4) ausgeschnitten sind und mit einem Rücksprung der Form der Ausschnitte der Vorderkante dieser unteren Ebene (21) der Aufnahme-Verbindungshälfte (4) folgen.
